# EUROPÄISCHE PATENTANMELDUNG

(11) **EP 0 947 260 A1**
(43) Veröffentlichungstag der Anmeldung: **06.10.1999**
(21) Anmeldenummer: 98101854.2
(22) Anmeldetag: 04.02.1998
(51) Int. Cl.: B22D 11/00, C22C 21/00

(54) **Gleitlager aus monotektischen Legierungen**

(71) Anmelder: Deutsches Zentrum für Luft- und Raumfahrt e.V., 53175 Bonn (DE)
(72) Erfinder: Ratke, Lorenz, 53757 St. Augustin (DE); Prinz, Bruno, 61169 Friedberg (DE)
(74) Vertreter: Jönsson, Hans-Peter, Dr.Dipl.-Chem.

(57) **Zusammenfassung**

Gegenstand der Erfindung ist die Verwendung von Verbundmaterialien aus monotektischen Legierungen in Gleitlagern sowie die Gleitlager aus Stahlträger und den genannten Legierungen.

Die Erfindung betrifft insbesondere die Verwendung von monotektischen Legierungen zur Herstellung von Gleitlagern mit im flüssigen Zustand vergleichsweise großer Mischungslücke und nach Erstarrung in der Matrix eingelagerten, eine größere Dichte als die Matrix selbst aufweisenden, in Tröpfchenform vorliegenden Minoritätsphase, erhältlich durch Stranggießen einer auf eine Temperatur oberhalb der Entmischungstemperatur erhitzten Schmelze mit großer Gieß- und Abkühlgeschwindigkeit zur direkten Plattierung von Stahlträgern ohne Anwendung von Zwischenschichten sowie die damit erhältlichen Gleitlager.

## Beschreibung

Gegenstand der Erfindung ist die Verwendung von Verbundmaterialien aus monotektischen Legierungen zur Herstellung von Gleitlagern sowie die Gleitlager aus Stahlträger und den genannten Legierungen.

Unter monotektischen Legierungen versteht man solche mit einer vergleichsweise großen Mischungslücke im flüssigen Zustand. Nach der Erstarrung weisen sie in der Matrix eingelagerte Tröpfchen auf, deren Dichte im allgemeinen größer als die der Matrix ist. Diese Legierungen werden durch Stranggießen einer auf eine Temperatur oberhalb der Entmischungstemperatur erhitzten Schmelze mit großer Gieß- und Abkühlgeschwindigkeit hergestellt.

In der EP 0 440 275 A1 ist ein Verfahren zur Herstellung monotektischer Legierungen beschrieben. Dieses Verfahren wird dadurch realisiert, daß die Schmelze vertikal zu einem Band von 5 bis 20 mm Dicke gegossen wird. Dabei stimmt die Abzugsrichtung des Strangs mit der Richtung der Schwerkraftsedimentation der schwereren monotektischen Minoritätsphase überein. Bei ausreichend großer Abkühl- und Erstarrungsgeschwindigkeit wird vor der Phasengrenze fest/flüssig ein sehr steiler Temperaturgradient aufrechterhalten, so daß bei legierungstechnisch gegebenem Abstand zwischen der Entmischungstemperatur und der monotektischen Reaktion die Sedimentationsstrecke und -zeit möglichst kurz und die der Schwerkraftsedimentation entgegengerichtete thermokapillare Konvektion der ausgeschiedenen Tröpfchen möglichst groß ist. Das Wegintervall für die Sedimentation der Tröpfchen der Minoritätsphase ist gegeben durch die Isothermen der Entmischungstemperatur und die Temperatur der monotektischen Reaktion, bei welcher die Matrixphase erstarrt. Dabei wird die zweite noch flüssige Phase mit der dann vorliegenden Verteilung in der Matrix eingeschlossen. Hier wird weiterhin beschrieben, daß das genannte Verfahren zur Herstellung von Gleitlagerwerkstoffen aus Aluminiumlegierungen besonders geeignet ist.

Gleitlager sind üblicherweise Verbundbauteile aus einem Stahlträger, der unter mechanisch-dynamischer Belastung die Tragfähigkeit gewährleistet, und darauf aufgebrachte Schichten aus speziellen Werkstoffen, welche die Funktions- bzw. Systemeigenschaften unter tribologischer Beanspruchung sicherstellen.

Bei den Funktionsschichten handelt es sich um Legierungen mit komplexer chemischer Zusammensetzung, die zu einer heterogenen Gefügestruktur führt, bei der insbesondere in einer hochfesten Matrix vergleichweise harte und/oder weiche heterogene Phasen mit einer geeigneten Größe und Form eingelagert sind.

Üblicherweise werden die Funktionsschichten auf das Trägermaterial durch Aufgießen einer Legierungsschmelze aus dem Gleitlagerwerkstoff, durch Walzplattieren von Bändern aus Vormaterial, durch Aufsintern von pulverförmigem Vormaterial, durch Spritzverfahren oder Abscheidung von Legierungen aus der Gasphase aufgebracht.

Bei großen Serien ist das Walzplattieren als das wirtschaftlichere Verfahren vorzuziehen. Ein Walzplattieren erfordert allerdings vergleichsweise große Verformungen und dabei große mechanische Beanspruchungen der Materialien und bewirkt deshalb eine große Zunahme der Härte. Die mechanische Belastbarkeit der Materialien wird dabei durch die Kerbwirkung von heterogenen Einlagerungen insbesondere in den Randbereichen der Bänder beeinträchtigt. Besonders kritisch sind diesbezüglich vor allem oberflächennahe Einlagerungen von weichen Phasen. Deshalb müssen bei den heute gängigen Gleitlagerwerkstoffen die Mengenanteile an derartigen weichen Phasen begrenzt werden, bei welchen die weichen Phasen homogen im Gefüge verteilt sind.

Bei einer nachfolgenden Wärmebehandlung wird die Härte verringert und gleichzeitig die Bindung zwischen Funktionsschicht und Träger verbessert. Die Bindung zwischen Trägermaterial und Gleitlagerwerkstoff wird beeinträchtigt, wenn bei dieser Wärmebehandlung die im Gleitlagerwerkstoff vorliegenden niedrig schmelzenden Phasen aufgeschmolzen werden und in die Bindungsebene infiltrieren, oder wenn sich zwischen Trägermaterial und Gleitlagerwerkstoff spröde intermetallische Phasen bilden. Zur Verhinderung dieser Reaktion wird deshalb üblicherweise zwischen dem Trägermaterial und dem Gleitlagermaterial durch Walzplattierung oder galvanische Abscheidung eine Zwischenschicht eingebracht. Dafür sind allerdings zusätzlich aufwendige Fertigungsschritte notwendig.

Demgegenüber besteht der wesentliche Gedanke der vorliegenden Erfindung darin, Material aus monotektischen Legierungen und insbesondere solchen mit im flüssigen Zustand vergleichweise großer Mischungslücke mit einer besonders geeigneten Verteilung der monotektischen Phasen durch Walzplattierung direkt auf das Trägermaterial ohne Anwendung von Zwischenschichten aufzubringen.

Überraschenderweise wurde gefunden, daß Gußbänder aus monotektischen Legierungen, wie oben definiert, eine stark inhomogene Verteilung der heterogenen Phasen im Gefüge aufweisen und zwar in einer solchen Weise, daß insbesondere die Oberflächen-nahen Zonen der Gußbänder an den oben erwähnten kritischen weichen monotektischen Gefügebestandteilen verarmt sind.

Dementsprechend besteht eine erste Ausführungsform der vorliegenden Erfindung in der Verwendung von monotektischen Legierungen zur Herstellung von Gleitlagern mit im flüssigen Zustand vergleichsweise großer Mischungslücke und nach Erstarrung in der Matrix eingelagerten, eine größere Dichte als die Matrix selbst aufweisenden, in Tröpfchenform vorliegenden Minoritätsphase, erhältlich durch Stranggießen einer auf eine Temperatur oberhalb der Entmischungstemperatur erhitzten Schmelze mit großer Gieß- und Abkühlgeschwindigkeit zur direkten Plattierung auf Stahlträger ohne Anwendung von Zwischenschichten.

Bei der Abkühlung aus der Schmelze entsteht ein von der Oberfläche des Bandes zum Inneren hin gerichteter Temperaturgradient, der durch thermokapillare Konvektion eine Anreicherung der Minoritätsphase im Innern des Gußbandes bewirkt.

Mit Hilfe der vorliegenden Erfindung lassen sich somit Materialien zur Verfügung stellen, die eine in der Nähe der Oberfläche einen Bereich aufweisen, der im wesentlichen frei von niedrigschmelzenden monotektischen Einschlüssen ist. Aus diesem Grund sind die Verarbeitungseigenschaften gegenüber einem Material mit gleichmäßiger Verteilung der Phasen derart verändert, daß ohne eine zusätzliche Zwischenschicht eine direkte Walzplattierung mit großer Verformung auf einem Trägermaterial möglich ist.

Die erfindungsgemaß einzusetzenden Legierungen können im wesentlichen auf der Basis des Verfahrens gemäß der EP 0 440 275 A1 hergestellt werden. Jedoch ist es erfindungsgemäß erforderlich, die Gießbedingungen dahin zu modifizieren, daß durch die Wahl der Gießgeschwindigkeit sowie der Temperatur der Schmelzüberhitzung und der Kühlbedingungen die Ausbildung der Randzone in gewissen Grenzen gesteuert werden kann.

Überraschenderweise konnte festgestellt werden, daß die inhomogene Verteilung der Gefügebestandteile sich auf die Weiterverarbeitung der Gußbänder nicht nachteilig, sondern in besonderer Weise vorteilhaft auswirkt.

Erfindungsgemäß ist es somit möglich, daß trotz einer Plattierung ohne Zwischenschicht auf Stahlträgern bei nachfolgenden Wärmebehandlungen in der Grenzfläche zwischen Stahlträger und monotektischem Lagerwerkstoff flüssige monotektische Phasen nicht auftreten und in die Grenzschicht diffundieren, und daß keine intermetallischen Phasen entstehen, die zu einer Versprödung führen.

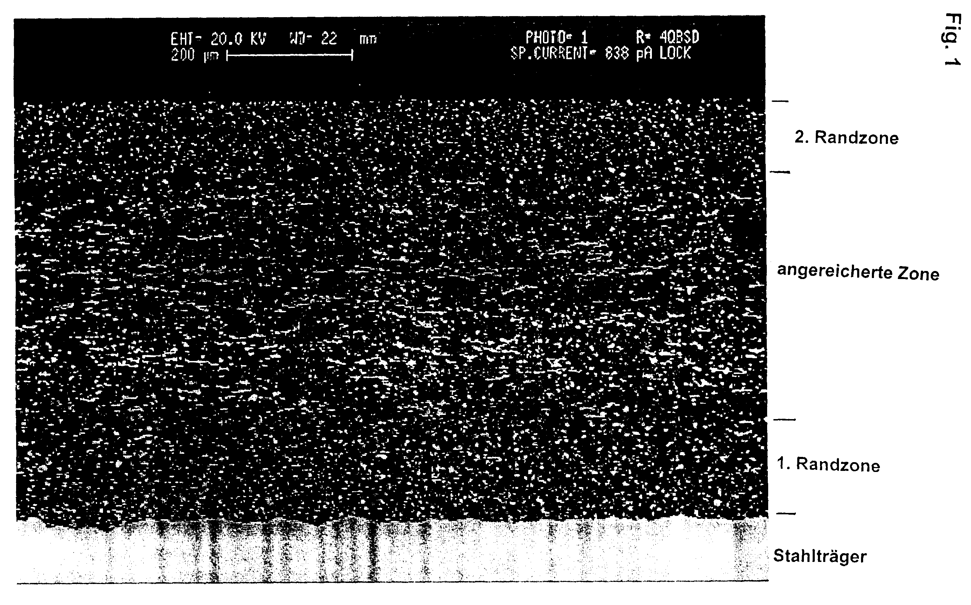

Die Fig. 1 zeigt das Gefüge einer AlSiPb-Legierung, die direkt auf einen Stahlträger aufplattiert wurde. Hierbei handelt es sich um eine Legierung der chemischen Zusammensetzung Al Si3,5 Pb6. Diese wurde ohne Zwischenschicht direkt auf einen Stahlträger plattiert. Dieser wurde vor dem Plattieren aufgerauht. Im direkten Kontakt mit dem grau erscheinenden Stahlträger befindet sich ein erster Randbereich, der frei von größeren Pb-Tropfen ist. Im Anschluß daran findet sich der relativ breite Bereich, in welchem die wesentliche Masse der monotektischen Pb-Phase angereichert ist, an die sich nach außen hin ein weiterer Randbereich mit geringem Bleigehalt anschließt.

In der Fig. 1 ist diese Anreicherung deutlich zu erkennen. Alle Bleitropfen, die beim Passieren der Mischungslücke entstehen und sich in der Bandmitte anreichern, sind relativ groß, beispielsweise 0,05 bis 0,1 mm, während die Tropfen in den Randbereichen nur ca. 1 bis 5 µm groß sind. Die großen Tropfen in der Bandmitte verformen sich beim Walzen und Walzplattieren zu Linsen, während sich die kleinen Tropfen nur unmerklich verformen. In der Realität sind die Tropfen in den Randzonen kleiner, als dies die angewendete Aufnahmetechnik erscheinen läßt.

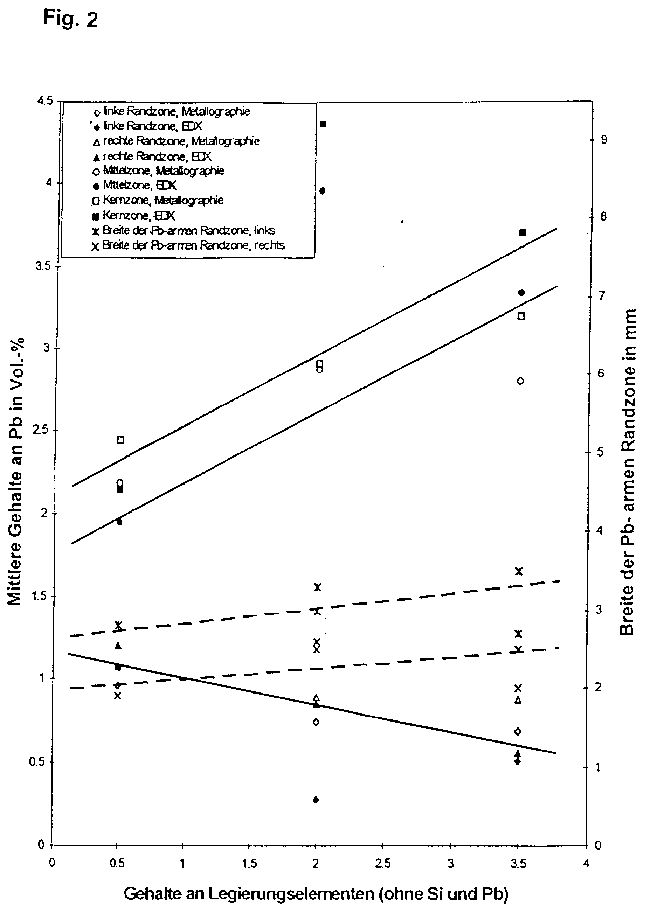

In gleicher Weise wird auch in der Fig. 2 der mittlere Gehalt an Blei bzw. monotektischer Phase sowie die Breiten der an Pb verarmten Randbereiche in Abhängigkeit von der Legierungszusammensetzung dargestellt. Hier entspricht etwa 1,4 Gew.-% Blei nur etwa 0,2 at-% Blei. Die Fig. zeigt, daß die Breite des Randbereichs (frei von größeren Pb-Tropfen, die beim Passieren der Mischungslücke entstehen) und deren Gehalte an monotektischen Phasen sowie die entsprechende Anreicherung von Pb oder Bi in der Bandmitte durch Variation der übrigen Legierungselemente Si, Zn,Cu, Sn, Ce Cr, Fe, Ni, Mn,Mg, Ti und andere gezielt beeinflußt werden können.

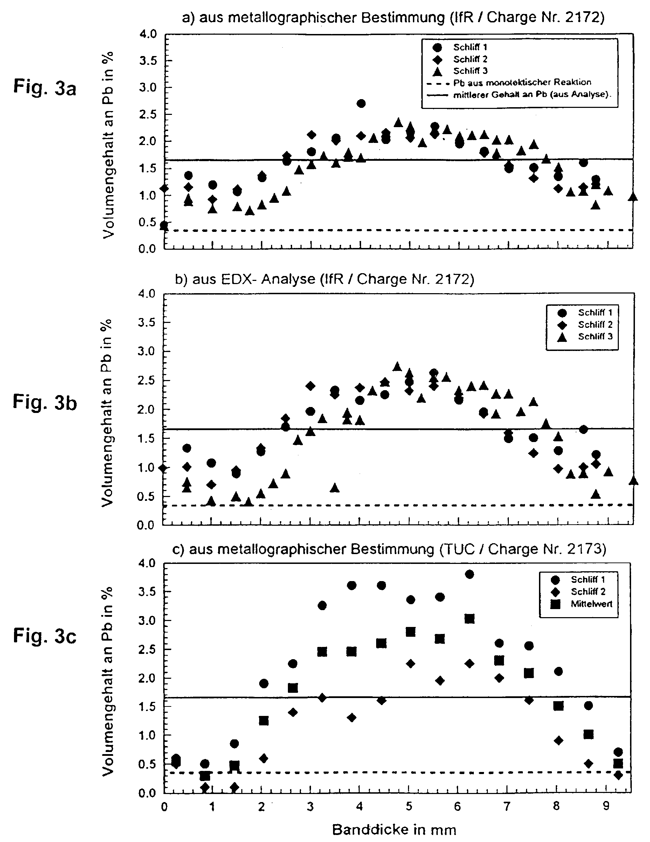

Die Fig. 3a, 3b und 3c zeigen, daß hier als Folge von asymmetrischen Kühlbedingungen die Randbereiche auf beiden Seiten des Bandes nicht gleich, insbesondere nicht gleich dick sind, sowie der Pb-Gehalt in beiden Randbereichen unterschiedlich hoch ist. Die jeweilige Breite der Randbereiche und die Größe der Anreicherung von monotektischer Phase in der Bandmitte kann durch die thermischen Bedingungen bei der Erstarrung (Gießgeschwindigkeit, Schmelzeüberhitzung, Zuführung von Trennmitteln, Intensität der Kühlung durch Variation der Beaufschlagung der Bandoberflächen mit Kühlwasser, welche für beide Seiten unterschiedlich ausgewählt werden kann) und durch die Legierungszusammensetzung gezielt beeinflußt werden. So läßt sich durch unsymmetrische Kühlung auch eine unsymmetrische Randverteilung innerhalb des Bandes während des Gießens erreichen. Die zur Herstellung der erfindungsgemäß einzusetzenden monotektischen Legierungen erforderlichen Trennmittel sind dem Fachmann als solche bekannt. Insbesondere kommen hier wasserfreie Öle in Frage, die dem Fachmann in einer großen Vielfalt zur Verfügung stehen.

Mit Hilfe der vorliegenden Erfindung wird somit vermieden, daß beim Walzplattieren ein direkter Kontakt der niedrigschmelzenden Phasen mit dem Trägermaterial entsteht, während andererseits auch bei geringerem mittleren Gesamtgehalt an weichen Legierungsphasen eine hohe Anreicherung in der Bandmitte erhalten wird. Hieraus ergeben sich bei günstigen Gehalten und günstiger Größenverteilung der Weichphasen im Hinblick auf die tribologischen Beanspruchungen als Gleitlager bessere Notlaufeigenschaften dieser Lager.

Die erfindungsgemäße Verwendung ist insbesondere auf Aluminiumlegierungen gerichtet, die eine oder mehrere Komponenten neben Aluminium enthalten. Besonders bevorzugt im Sinne der vorliegenden Erfindung sind daher übermonotektische Aluminiumlegierungen, die 2 bis 20 Gew.-% Blei oder 2 bis 20 Gew.-% Bismut enthalten.

Besondere Eigenschaften können dann erhalten werden, wenn man Legierungen einsetzt, die neben den obengenannten Bestandteilen auch 1 bis 15 Gew.-% Silicium oder 1 bis 10 Gew.-% Zink oder 1 bis 15 Gew.-% Kupfer sowie zusätzlich gegebenenfalls 0,1 bis 10 Gew.-% Zinn enthalten.

In gleicher Weise sind auch entsprechend dem Stand der Technik Legierungen der allgemeinen chemischen Zusammensetzung besonders bevorzugt, die neben den obengenannten Bestandteilen weiterhin 0,1 bis 5 Gew.-% Cer, 0,05 bis 3 Gew.-% Eisen, 0,05 bis 3 Gew.-% Mangan, 0,05 bis 3 Gew.-% Magnesium, 0,05 bis 3 Gew.-% Nickel und/oder 0,01 bis 5 Gew.-% Titan umfassen.

Mit Hilfe der vorliegenden Erfindung ist es möglich, mit den obengenannten Materialien Verbundbauteile mit besonderen Funktionsschichten ohne Anwendung von Zwischenschichten herzustellen, wobei die Dicke der Funktionsschicht vorzugsweise 0,1 bis 3 mm betragen sollte.

Eineweitere Ausführungsform der vorliegenden Erfindung beinhaltet somit Gleitlager aus einem Stahlträger und einer damit ohne Zwischenschicht verbundenen Funktionsschicht einer Legierung wie oben definiert.

Mit Hilfe der vorliegenden Erfindung lassen sich die Randbereiche durch Beeinflussung der Legierungszusammensetzung, Anwendung von Trennmitteln und Variation der Gieß- und Kühlbedingungen beim Bandguß in einem großen Bereich variieren, die frei oder überwiegend frei von weichen monotektischen Phasen sind. Dabei ist es möglich, daß aufgrund der Anreicherungen trotz nur vergleichsweise geringer mittlerer Gehalte in der Legierung in der Bandmitte bis zu 10 Vol.-% an monotektischen Phasen gefunden werden.

Das mit Hilfe der vorliegenden Erfindung erhältliche Gleitlager kann insbesondere nach Fertigstellung des Gesamtlagers in dem beanspruchten Bereich soweit abgetragen werden, daß der Randbereich, der frei oder überwiegend frei von monotektischen Phasen nach der Herstellung ist, so daß der den Anforderungen des Lagers notwendige und optimale Gehalt an Weichphase freigelegtwerden kann.

## Patentansprüche

1. Verwendung von monotektischen Legierungen zur Herstellung von Gleitlagern mit im flüssigen Zustand vergleichsweise großer Mischungslücke und nach Erstarrung in der Matrix eingelagerten, eine größere Dichte als die Matrix selbst aufweisenden, in Tröpfchenform vorliegenden Minoritätsphase, erhältlich durch Stranggießen einer auf eine Temperatur oberhalb der Entmischungstemperatur erhitzten Schmelze mit großer Gieß- und Abkühlgeschwindigkeit zur direkten Plattierung von Stahlträgern ohne Anwendung von Zwischenschichten.

2. Verwendung nach Anspruch 1, dadurch gekennzeichnet, daß man Aluminium-Legierungen mit Gehalten von
2 bis 30 Gew.-% Blei oder
2 bis 30 Gew.-% Bismut
einsetzt.

3. Verwendung nach Anspruch 2, dadurch gekennzeichnet, daß man Legierungen mit weiteren Legierungselementen
1 bis 15 Gew.-% Silicium oder
1 bis 10 Gew.-% Zink oder
1 bis 15 Gew.-% Kupfer und/oder
0,1 bis 10 Gew.-% Zinn
einsetzt.

4. Verwendung nach Anspruch 2 oder 3, dadurch gekennzeichnet, daß die Legierungen weiterhin (ein oder mehrere) weitere Legierungselemente
0,1 bis 5 Gew.-% Cer,
0,05 bis 3 Gew.-% Chrom,
0,05 bis 3 Gew.-% Eisen,
0,05 bis 3 Gew.-% Mangan,
0,05 bis 3 Gew.-% Magnesium,
0,05 bis 3 Gew.-% Nickel und/oder
0,001 bis 5 Gew.-% Titan
enthalten können.

5. Verwendung nach einem der Ansprüche 1 bis 4 zur Herstellung von Funktionsschichten in einer Dicke von 0,1 bis 3 mm auf einem Trägermaterial, ohne Anwendung von Zwischenschichten.

6. Gleitlager aus einem Stahlträger und einer damit ohne Zwischenschicht verbundenen Funktionsschicht einer Legierung, wie in einem der Ansprüche 1 bis 5 definiert.

7. Gleitlager nach Anspruch 6, dadurch gekennzeichnet, daß 5 bis 20 % der Dicke der Legierungen durch Randbereiche definiert sind, die frei oder im wesentlichen frei von weichen, monotektischen Phasen sind.
